# EUROPÄISCHE PATENTANMELDUNG

(11) **EP 1 163 837 A1**
(43) Veröffentlichungstag der Anmeldung: **19.12.2001**
(21) Anmeldenummer: 01113355.0
(22) Anmeldetag: 01.06.2001
(51) Int. Cl.: A01F 15/10, A01D 90/02

(54) **Fördervorrichtung für Erntemaschine**

(30) Priorität: 15.06.2000 US 594991
(71) Anmelder: DEERE & COMPANY, Moline, Illinois 61265-8098 (US)
(72) Erfinder: Engel, Manfred, 66484 Grossteinhausen (DE)
(74) Vertreter: Magin, Ludwig Bernhard

(57) **Zusammenfassung**

Eine Fördervorrichtung (10) für eine Erntebergungsmaschine (10) ist mit wenigstens einer Schnecke (50, 52) versehen, die an dem aufnahmeseitigen, bzw. stromaufwärts gelegenen Endbereich einen Abweiser (76) aufweist. Der Abweiser (76) verläuft ausgehend von einem Schneckenkern (54, 56) gekrümmt und in der Drehrichtung mit größer werdendem Radius, um Fördergut von dem Schneckenkern (54, 56) nach außen zu bewegen, damit es nicht zu Wickelproblemen kommt.

## Beschreibung

Die Erfindung betrifft eine Fördervorrichtung mit wenigstens einer Schnecke mit einem Schneckenkern und wenigstens einer darauf befindlichen Schneckenwendel.

Die EP-A1-0 815 720 offenbart eine Ballenpresse mit einer Fördervorrichtung, die hinter einer sog. Pick-Up einen Rotationsförderer aufweist. Dieser Rotationsförderer enthält außenliegende zur Mitte fördernde Schnecken und dazwischen einen Mitnehmerbereich. An den äußeren, d. h. stromaufwärts gelegenen Endbereichen der Schnecken sind jeweils sog. Abschirmbleche angebracht, die als rechteckige und diametral von dem Schneckenkern abstehende Rohre, Stege oder dergleichen ausgebildet sind.

Das der Erfindung zugrunde liegende Problem wird darin gesehen, daß sich das Erntegut an diesen Abschirmblechen verfangen und somit Störungen im Gutfluss verursachen kann.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird das z. T. störrige Erntegut nicht in einem Zwickel gefangen, sondern allmählich vom Schneckenkern zur Schneckenaußenfläche angehoben, von wo es später weiter befördert wird. Die Krümmung des Abweisers kann entsprechend der Größe der Schnecke, dem Fördergut, der Fördergeschwindigkeit und dergleichen ausgebildet werden. Als Material für den Abweiser kommt sowohl Metall als auch Kunststoff in Frage. Die Steigung kann stet oder wechselnd und gemäß bekannter mathematischer Funktionen oder unregelmäßig erfolgen. Der Abweiser ist vorzugsweise auf dem größten Teil seiner Fläche eben ausgebildet, um dem Fördergut so wenig Bewegungswiderstand wie möglich zu bieten.

Wenn der Abweiser radial außen mit den Schneckenwendeln abschließt, ist gewährleistet, daß das Fördergut weit genug aus dem Schneckeninneren herausbewegt wird, andererseits aber auch nicht zuviel Bauraum benötigt wird.

Eine Überlappung der Endbereiche des Abweisers und der Schneckenwendel hat den Vorteil, daß eine kontinuierliche, ununterbrochene Fläche entsteht, auf der das Fördergut entlanggleiten kann.

Eine oberschlächtige Förderung vermeidet eine zu starke Verdichtung des Förderguts, sodaß insbesondere bei landwirtschaftlichem Erntegut kein Qualitätsverlust eintritt.

Eine schubweise Förderung einzelner Materialchargen wird vermieden, indem die Abgabeintervalle verkürzt werden, was durch eine Vielzahl, wenigstens aber zwei, Schneckenwendeln möglich ist, die eigene Abstreifer aufweisen, um Wickelprobleme zu vermeiden.

Das Fördergut erfährt einen geringen Bewegungswiderstand beim Gleiten über die Kante des Abstreifers, wenn diese mit einer kontinuierlichen Steigung verläuft, wie dies bei einem Bogen der Fall ist.

Damit die Lage des Förderguts im radial außenliegenden Bereich der Schnecke in der Abgabezone des Förderguts nicht verloren geht, ist vorgesehen, dort ähnlich wirkende Gutheber anzubringen.

Eine unmittelbare Weitergabe des Förderguts ohne Unterbrechung des Gutflusses findet dort statt, wo zwischen zwei gegenläufigen Schnecken koaxial rotierende Mitnehmer vorgesehen sind, die z. B. auf einer Welle befestigt sind. Derartige Mitnehmer würden sich im Fall einer Presse über den Bereich der Ballenpreßkammer erstrecken.

Erntemaschinen und Erntebergungsmaschinen werden von einer großen Vielfalt von Fördergütern beaufschlagt, die zuweilen schwer zu fördern sind. Die Verwendung des erfindungsgemäßen Abstreifers erzielt dort eine besonders hohe Wirkung, weil eine Unterbrechung des Erntebetriebs hohe Folgeschäden verursachen kann.

In der Zeichnung ist ein nachfolgend näher beschriebenes Ausführungsbeispiel der Erfindung dargestellt. Es zeigt:
- Fig. 1: eine Erntebergungsmaschine mit einer Fördervorrichtung in Seitenansicht,
- Fig. 2: die Fördervorrichtung mit zwei Schnecken in einer Vorderansicht und
- Fig. 3: eine Schnecke in einer perspektivischen Ansicht von vorne.

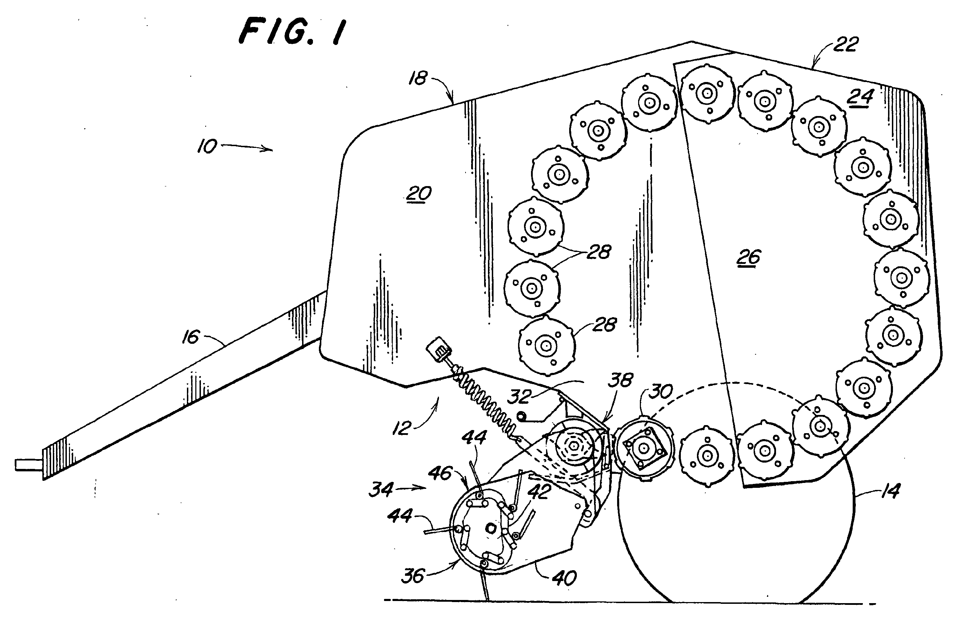

Figur 1 zeigt eine Erntebergungsmaschine 10 in der Form einer Presse zum Herstellen großer zylindrischer Ballen. Die Erntebergungsmaschine 10 enthält ein Fahrgestell 12, das von einem Paar Bodenrädern 14 getragen wird und von dem sich eine Deichsel 16 von dem Fahrgestell 12 aus erstreckt, deren vorderer Endbereich so ausgebildet ist, daß er an ein nicht gezeigtes Zugfahrzeug, z. B. einen landwirtschaftlichen Ackerschlepper angeschlossen werden kann. Das Fahrgestell 12 enthält einen Vorderteil 18 mit sich gegenüberliegenden Seitenwänden 20 und ein rückwärtiges Entladegatter 22 mit sich gegenüberliegenden Seitenwänden 24. Das Entladegatter 22 ist für eine Bewegung zwischen einer gezeigten unteren geschlossenen Stellung und einer angehobenen Entladestellung, um einen gebildeten Ballen auf den Boden abzulegen, an einen rückwärtigen oberen Bereich des Vorderteils 18 schwenkbar angeschlossen. Die Erntebergungsmaschine 10 enthält eine Ballenbildungskammer 26, die zwischen den Seitenwänden 20, 24 zusammen mit einer Vielzahl identischer Rollen 28 und einer geringfügig größeren Rolle 30 im Bodenbereich gebildet ist, die in den Seitenwänden 20 und 24 gelagert sind, wobei die Rollen 28, 30 im wesentlichen auf einer Kreisbahn angeordnet sind. Eine untere der Rollen 28 und die Rolle 30 sind voneinander entfernt, um einen Einlass 32 in die Ballenbildungskammer 26 zu bilden. An der Vorderseite des Fahrgestells 12 ist eine Fördervorrichtung 34 oder ein Gutförderer zum Zuführen von Erntegut durch den Einlass 32 montiert, wobei in der Fördervorrichtung 34 die vorliegende Erfindung enthalten ist. Während die Fördervorrichtung 34 hier in Verbindung mit einer als Presse ausgebildeten Erntebergungsmaschine 10 gezeigt ist, könnte die vorliegende Erfindung auch mit verschiedenen anderen Erntemaschinen oder Erntebergungsmaschinen verwendet werden.

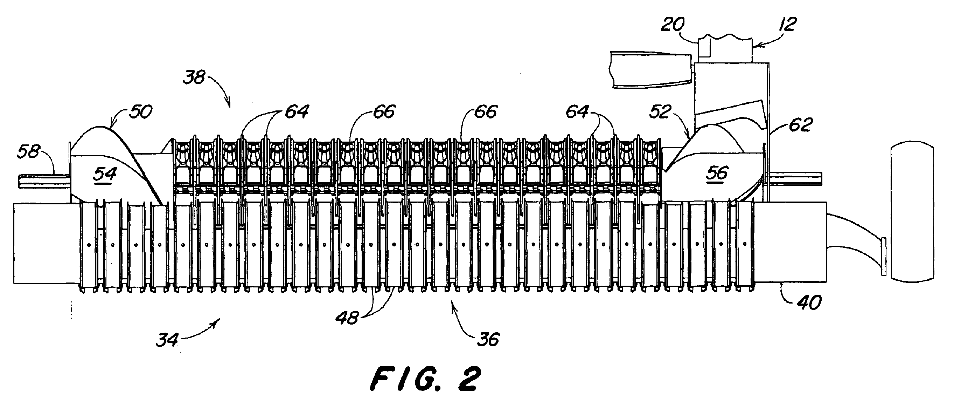

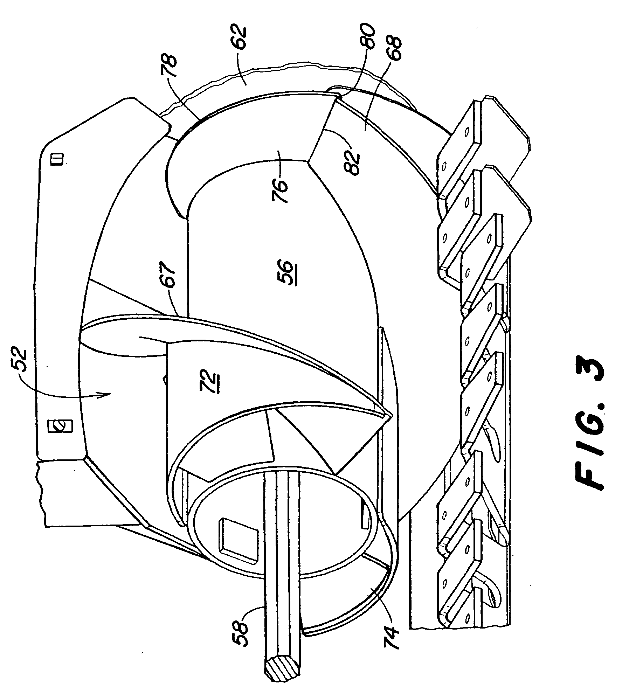

Aus den Figuren 2 und 3 wird ersichtlich, daß die Fördervorrichtung 34 eine Breite aufweist, die größer ist als die der Ballenbildungskammer 26. Die Fördervorrichtung 34 ist aus einer Aufnahmevorrichtung 36 und einem Rotationsförderer 38 zusammengesetzt. Die Aufnahmevorrichtung 36 ist von herkömmlicher Ausführung und enthält einen Rahmen 40, der von dem Fahrgestell 12 getragen wird. Die Aufnahmevorrichtung 36 enthält einen mit Zinken bestückten Rotor- oder Haspelzusammenbau 42 mit fünf Zinkenträgern, die fünf Sätze von Federzinken 44 tragen, die um eine quer verlaufende Drehachse des Rotor- oder Haspelzusammenbaus 42 winkelmäßig beabstandet sind, wobei einzelne Federzinken 44 jedes Satzes in koplanaren Gruppen quer über die Aufnahmevorrichtung 36 beabstandet angeordnet sind. Ein U-förmiger Abstreifer-Zusammenbau 46 öffnet sich nach hinten und erstreckt sich um den Rotor- oder Haspelzusammenbau 42, wobei der Abstreiferzusammenbau 46 einzelne Bänder 48 aufweist, die in der Querrichtung zueinander einen Abstand aufweisen, um eine Vielzahl von Schlitzen zu bilden, durch die sich entsprechende koplanare Sätze von Federzinken 44 während des Betriebs bewegen, wobei bemerkt wird, daß Erntegut entlang einer Oberfläche gleitet, die von den Bändern 48 gebildet wird und zwar bis zu dem Punkt, an dem das Erntegut von dem Rotationsförderer 38 erfasst wird.

Der Rotationsförderer 38 enthält rechte bzw. linke in diesem Ausführungsbeispiel als Stummelschnecken ausgebildete Schnecken 50 bzw. 52 mit rohrförmigen Schneckenkernen 54 und 56, die drehfest mit einer sechskantigen Antriebswelle 58 verbunden sind, die sich axial durch die Schneckenkerne 54, 56 hindurch erstreckt. Die Schnecken 50, 52 besitzen äußere Enden, die einwärts von rechten bzw. linken Seitenwänden enden, die wiederum an das Fahrgestell 12 angebracht sind, wobei nur eine linke Seitenwand 62 gezeigt ist. Zwischen den inneren Enden der Schnecken 50, 52 befinden sich starre Mitnehmer 64 zum Fördern von Erntegut, die aus plattenförmigem Material gebildet werden, und zwar derart, daß jede Platte mit koplanaren Mitnehmern 64 an sich diametral gegenüberliegenden Stellen ausgebildet wird. Jedem Paar sich diametral gegenüberliegender Mitnehmer 64 ist ein Abstreifer 66 zugeordnet, wobei die Abstreifer 66 in der Querrichtung einen Abstand zueinander aufweisen, so daß das jeweilige Paar Mitnehmer 64 sich zwischen ihnen hindurch bewegen kann.

Die vorliegende Erfindung bezieht sich auf den Aufbau der Schnecken 50 und 52, von denen nur die linke Schnecke 52 in Einzelheiten dargestellt ist, allerdings mit dem Verständnis, daß die rechte Schnecke 50 eine spiegelbildliche Ausführung der Schnecke 52 darstellt. Aus Figur 3 ist ersichtlich, daß die Schnecke 52 erste und zweite Schneckenwendel 67 bzw. 68 aufweist, die zueinander winkelmäßig versetzt auf dem Schneckenkern 56 befestigt sind. Die Schneckenwendel 67 bzw. 68 enthalten jeweils eine voreilende Kante, die sich gerade einwärts eines äußeren Endes des betreffenden Schneckenkerns 56 befindet und sich im allgemeinen radial zu dessen Mittenachse erstreckt, wobei nur eine vorlaufende Kante 82 der Schneckenwendel 68 sichtbar ist. Die Schneckenwendel 67, 68 sind jeweils derart gewunden, daß sie das Fördergut von der Seitenwand 62 aus nach innen fördern, wenn der Rotationsförderer 38 in seiner normalen Förderrichtung gedreht wird, die dem Uhrzeigerdrehsinn entspricht, wenn man auf Figur 1 schaut. An den inneren Bereichen der Schnecke 52 befinden sich erste bzw. zweite Gutheber 72 bzw. 74, die jeweils in der Form einer bogenmäßig gekrümmten und konvergierenden Platte ausgebildet sind. Die breiten Enden der Gutheber 72 und 74 sind parallel zu der Drehachse ausgerichtet und an entsprechenden diametral gegenüberliegenden Stellen auf den Schneckenkern 56 aufgeschweißt. Eine innere Kante des Guthebers 72 ist an einer Vorlaufkante der ersten Schneckenwendel 67 und eine innere Kante des Guthebers 74 ist an eine Vorlaufkante der zweiten Schneckenwendel 68 angeschweißt. Es wird angemerkt, daß die Gutheber 72 und 74 mit Bezug auf die Mittenachse des Schneckenkerns 56 zunehmend nach außen gekrümmt sind, um so Gut von der Oberfläche des Schneckenkerns 56 anzuheben und zu dem Außenumfang der Schneckenwendel 67 und 68 weiterzugeben.

Die vorliegende Erfindung wird von einem Paar identischer Abweiser 76 verwirklicht, von denen nur einer zu sehen ist, die der Verhinderung von Wickelerscheinungen dienen und die eine vergleichbare Funktion haben wie die Gutheber 72 und 74. Jeder der Abweiser 76 ist in der Art einer Platte mit einem hauptsächlichen ebenen Bereich ausgebildet, der senkrecht zu der Drehachse des Schneckenkerns 56 ausgerichtet ist und eine radial innenliegende gekrümmte Kante aufweist, die an den Schneckenkern 56 an einer Stelle angeschweißt ist, die sich so weit außen wie möglich nahe der Seitenwand 62 befindet. In einer Ansicht auf die Stirnseite besitzt der Abweiser 76 eine freie äußere gewölbte Kante 78, die sich mit dem äußeren Profil des Guthebers 72 deckend angebracht ist, wobei sie in gleicher Weise wie das äußere Profile des Guthebers 72 geformt ist, um sich so nach außen bis zu einer sich im wesentlichen radial erstreckenden endseitigen Kante 80 zu krümmen. Der sichtbare Abweiser 76 ist der Schneckenwendel 68 zugeordnet und ist tatsächlich in einem sich überlappenden Stoß mit der äußeren vorlaufenden Kante 82 der Schneckenwendel 68 verschweißt. Es ist somit erkenntlich, daß Gutfasern bzw. Gutstängel, die von der äußeren gewölbten Kante 78 des Abweisers 76 erfasst werden, von dem Schneckenkern 56 angehoben und nach außen zu dem Außenumfang der Schneckenwendel 68 gleiten. Der nicht sichtbare Abweiser 76 wird in gleicher Weise wirken, um Erntegut zu dem Außenumfang der Schneckenwendel 67 anzuheben. Es wird hier bemerkt, daß die Kante des Abweisers 76, die sich nahe der Schneckenwendel 67 befindet, einen gebogenen Bereich darstellen könnte, der den Endbereich der zugeordneten Schneckenwendel 67 überlappt.

Demzufolge ist erkenntlich, daß die Abweiser 76 die Neigung des Förderguts, sich in den äußeren Endbereich der Schneckenwendel 67 und 68 zu verfangen, verringern und dadurch die Neigung des Förderguts, sich um die äußeren Endbereiche der Schnecken 52 zu wickeln, herabsetzen. Selbstverständlich sind analog ausgebildete Abweiser geeignet, in gleicher Weise zu funktionieren, um die Neigung des Förderguts, sich um die rechte Schnecke 50 zu wickeln, zu reduzieren.

## Patentansprüche

1. Fördervorrichtung (34) mit wenigstens einer Schnecke (50, 52) mit einem Schneckenkern (54, 56) und wenigstens einer darauf befindlichen Schneckenwendel (67, 68) und mit wenigstens einem Abweiser (76) am stromaufwärts gelegenen Endbereich der Schnecke (50, 52), wobei der Abweiser (76) radial über den Schneckenkern (54, 56) hinausragt und eine gekrümmte von einer voreilenden, radial innenliegenden Stelle zu einer nacheilenden radial außenliegenden Stelle verlaufende äußere Kante (78) aufweist.

2. Fördervorrichtung nach Anspruch 1, **dadurch gekennzeichnet, daß** der Abweiser (76) radial außen mit der Schneckenwendel (67, 68) abschließt.

3. Fördervorrichtung nach Anspruch 1 oder 2, **dadurch gekennzeichnet, daß** der weite Teil des Abweisers (76) an die Schneckenwendel (67, 68) anschließt.

4. Fördervorrichtung nach einem oder mehreren der vorherigen Ansprüche, **dadurch gekennzeichnet, daß** sich die Endbereiche des Abweisers (76) und der Schneckenwendel (67, 68) an dem stromaufwärts liegenden Ende der Schnecke (50, 52) überlappen.

5. Fördervorrichtung nach einem oder mehreren der vorherigen Ansprüche, **dadurch gekennzeichnet, daß** die Schnecke (50, 52) oberschlächtig fördernd ausgebildet ist.

6. Fördervorrichtung nach einem oder mehreren der vorherigen Ansprüche, **dadurch gekennzeichnet, daß** weitere Schneckenwendel (67, 68) vorgesehen sind und jeder Schneckenwendel (67, 68) ein Abstreifer (76) zugeordnet ist.

7. Fördervorrichtung nach einem oder mehreren der vorherigen Ansprüche, **dadurch gekennzeichnet, daß** die äußere Kante (78) des Abstreifers (76) bogenförmig verläuft.

8. Fördervorrichtung nach einem oder mehreren der vorherigen Ansprüche, **dadurch gekennzeichnet, daß** die Schnecke (50, 52) als Stummelschnecke ausgebildet ist und an einem abgabeseitigen Ende wenigstens einen Gutheber (72, 74) aufweist, dessen Außenfläche in Deckung mit der Kante (78) verläuft.

9. Fördervorrichtung nach einem oder mehreren der vorherigen Ansprüche, **dadurch gekennzeichnet, daß** zwischen zwei gegenläufig fördernden Schnecken (50, 52) koaxial rotierende Mitnehmer (64) vorgesehen sind.

10. Verwendung einer Fördervorrichtung (34) nach einem oder mehreren der vorherigen Ansprüche in einer Erntebergungsmaschine (10) oder einer Erntemaschine.
